# EUROPEAN PATENT APPLICATION

(11) **EP 2 395 618 A1**
(43) Date of publication of application: **14.12.2011**
(21) Application number: 10165282.4
(22) Date of filing: 08.06.2010
(51) Int. Cl.: H02G 1/08, H02G 1/10, E21B 33/038

(54) **Installing a cable in an underwater well installation**

(71) Applicant: Vetco Gray Controls Limited, Bristol BS48 1BS (GB)
(72) Inventor: Ellson, Nicholas, Bristol BS3 4DJ (GB); Vyas, Parag, 85748 Garching bei München (DE)
(74) Representative: Emerson, Peter James

(57) **Abstract**

A method of installing a cable (9) between a topside location (7) of an underwater well installation and an underwater location (16) of the installation, the method comprising inserting an end of the cable into a passageway (8, 3, 20) between the locations and using a fluid passed along the passageway to displace the cable along the passageway so that it extends between said locations.

## Description

### Field of the Invention

This invention relates to installing a cable in an underwater well installation.

### Background of the Invention

In subsea hydrocarbon well installations, umbilicals transmit power and fluid from a surface platform to a subsea fluid production facility. They typically have redundant or spare conduits for chemical and hydraulic control lines within them, originally intended for back-up purposes.

Over time, the insulation around the copper cores of electrical cables in the umbilical may degrade, for example through water ingress or chemical degradation. The cores themselves may also degrade, typically through corrosion. Such degradation may result in a reduction in the electrical capacity of the cores so that inadequate power is available to the well installation which is then unable to function adequately. An alternative possibility is to update the well installation with additional facilities requiring additional power which is not available with the existing power distribution system. Currently, the only solution to these problems is to replace the umbilical, which is very expensive, although an alternative solution is taught in UK Patent Application No. 0921858.7.

US-A-5 871 052 relates to downhole tool deployment techniques using mud pumping techniques and US-A-5 967 816 relates to a female wet connector for use in such techniques.

### Summary of the Invention

According to the present invention, there is provided a method of installing a cable between a topside location of an underwater well installation and an underwater location of the installation, the method comprising inserting an end of the cable into a passageway between the locations and using a fluid passed along the passageway to displace the cable along the passageway so that it extends between said locations.

Said passageway could comprise a conduit in an umbilical between said locations, for example a spare or unused conduit in said umbilical or one used in operation of the well installation.

Said umbilical could be coupled at one, upper end to a topside umbilical termination unit. In this case, at said upper end, said conduit could be coupled to said topside umbilical termination unit via an upper duct providing part of said passageway and into which said cable is inserted.

At an opposite, lower end of said umbilical, said conduit could communicate with a lower duct providing part of said passageway. Said fluid could be expelled or recovered from said lower duct or said lower duct could be coupled with an underwater umbilical termination unit.

There could be a connector in said lower duct with which an opposite end of said cable couples. The connector could communicate externally of the the lower duct.

Preferably, said passageway is provided with means for guiding said cable in said passageway, said guiding means being, for example, in such a lower duct.

Preferably, said cable carries means against which said fluid acts to assist displacement of the cable by said fluid.

Said cable could include at least one electrical conductor and/or at least one fibre optic line.

In another method, according to the invention, said cable is displaced from said underwater location to said topside location, said fluid being production fluid.

In a further method according to the invention, said passageway comprises a line between said locations carrying a fluid such as a chemical or water and/or gas.

The present invention also comprises an installation which includes a cable installed by a method according to the invention.

### Brief Description of the Drawings

Fig. 1 shows schematically the topside end of a subsea hydrocarbon well installation;
Fig. 2 shows schematically the subsea end of the installation;
Fig. 3 is a detailed view of part of what is shown in Fig. 1;
Fig. 4 is a detailed view of part of what is shown in Fig. 2; and
Fig. 5 shows schematically an alternative to what is shown in Fig. 2.

### Description of Embodiments of the Invention

In the following embodiments, an insulated cable is "pumped down" a spare, back-up or in-use chemical or hydraulic control line conduit. The cable may have one, two (for a return path) or more cores and can be used to transmit electric power and/or data to and/or from a subsea production facility. A fibre-optic cable could also be in the cable to provide a replacement, or additional, communication link. The embodiments allow additional electric power and/or communications capability to a "Brownfield" site, or provide for additional electrical and/or communication facilities to an updated fluid production facility.

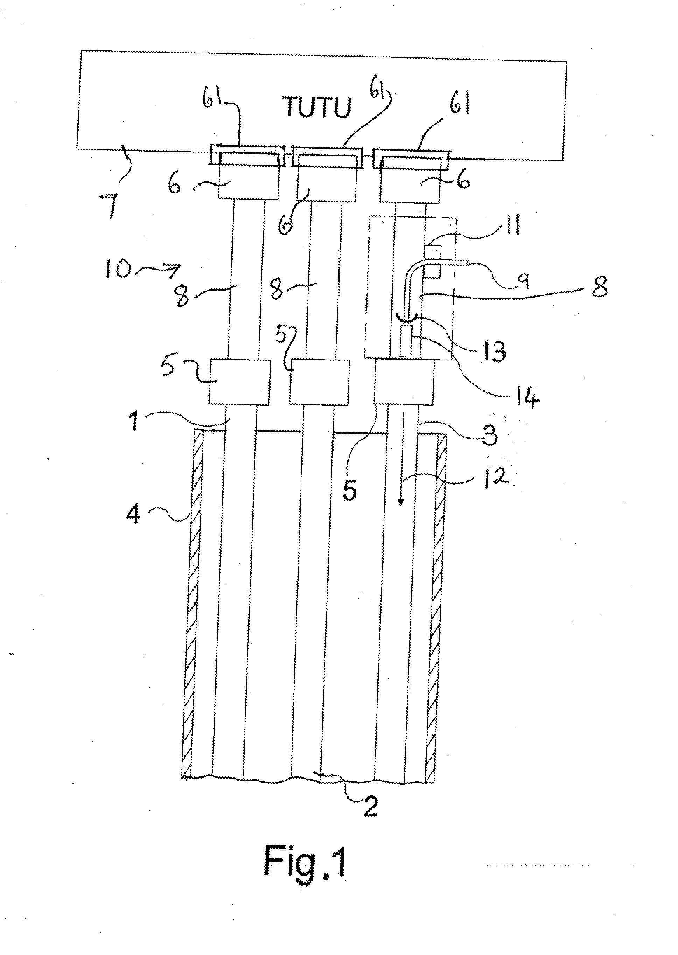

Referring first to Fig. 1, at the surface of a subsea hydrocarbon well installation, a multiplicity of gas and/or fluid and/or chemical supply conduits 1, 2 and 3 (three shown as an example only) and power and/or communication cables (not shown) within an umbilical 4 are terminated with connectors 5. The connectors 5 are coupled with connectors 6 via respective ones of upper ducts 8, which may be rigid ducts. Connectors 6 themselves mate with respective ones of connectors 61 at a topside umbilical termination unit (TUTU) 7.

Conduit 3 (which could, for example, be a spare or unused conduit in the umbilical 4) is chosen to receive a "pumped down" replacement or supplemental cable 9. For the chosen conduit 3, the respective duct 8 forms part of a "side-entry" sub-assembly 10, which includes an arrangement 11 at duct 8 of conduit 3 that allows the cable 9 to enter but not fluid to escape. Fluid (either the normal fluid for conduit 3 or a special inert fluid if conduit 3 is a spare or unused conduit) is then pumped down the conduit 3 from the duct 8 of sub-assembly 10 in the direction of arrow 12, towards a subsea facility, to carry cable 9 with it. A swab cup 13 is placed towards the end of cable 9 to help in this process. The cable 9 could comprise at least one electrical conductor for power and/or communications or it could comprise at least one fibre optic line for communication purposes or it could comprise at least one electrical conductor for power and/or communications and at least one fibre optic line. The cable 9 is terminated with a wet mateable connector 14 suitable for the function or functions of cable 9. The swab cup 13 may be omitted if connector 14 is itself sufficient to assist in the "pumping down" of cable 9.

It should be noted that the sub-assembly 10 (which also comprises the rest of the ducts 8 and all the connectors 6) is effectively an extension of the umbilical 4 and its connectors 5 (which would otherwise mate with connectors 6) and is installed for the purpose of providing a side entry for inserting a cable, typically to extend the life of a "Brownfield" well. It should also be noted that the umbilical 4 in the Figures is not to scale and is exaggerated in size compared to the sub-assembly 10 and TUTU 7.

Although in this embodiment spare or disused conduit 3 within the umbilical 4 is used, if the size of the cable 9 and its swab cup 13 and connector 14 are small enough compared with the diameter of the conduit 3, then it could be a conduit which continues to be used for its normal function. Thus, pumping fluid down the conduit to transport the replacement or supplemental cable 9 may be part of normal operations or could be performed specifically for this task.

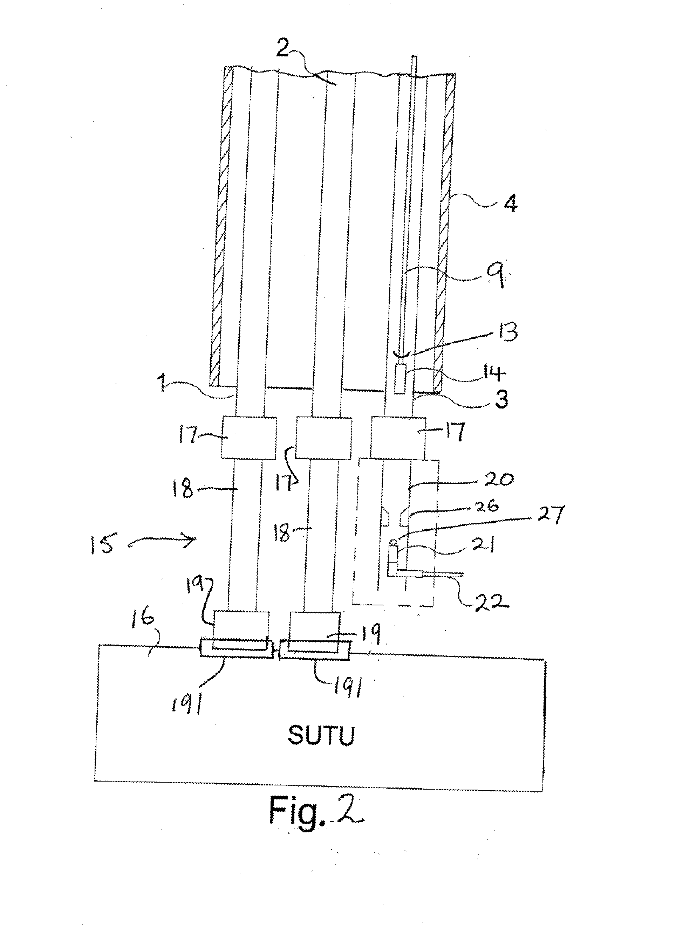

As shown diagrammatically in Fig. 2, an exit sub-assembly 15 is placed between the subsea end of the umbilical 4 and a subsea umbilical termination unit (SUTU) 16. The sub-assembly 15 comprises, for each of connectors 17 at the subsea ends of the conduits in the umbilical 4 except conduit 3 used for "pumping down" the cable, a lower duct 18 (which may be rigid) terminating in a connector 19 which mates with a respective connector 191 of the SUTU 16. Also, the sub-assembly 15 comprises a lower duct 20 (which may be rigid) extending from the connector 17 of conduit 3 for expelling fluid from conduit 3 to the surrounding water and carrying at its lower end a wet mateable connector 21 providing connection to an external cable 22 to feed subsea devices such as at least one subsea control module (SCM). The wet mateable connector 21 allows fluid past it both before and after being mated with the connector 14.

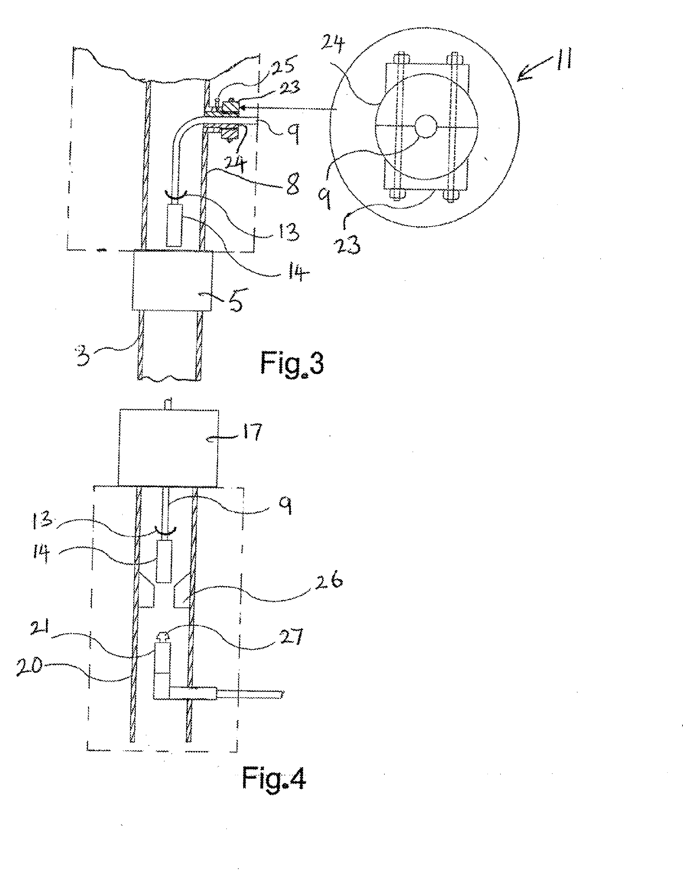

The mode of operation for installing cable 9 in the conduit 3 within the umbilical 4 is as follows. Figs. 3 and 4 show details of the topside side-entry and subsea cable exit arrangements. Before the side entry sub-assembly 10 is installed between the umbilical 4 and the TUTU 7, the cable 9 without swab cup 13 or the connector 14 is inserted through a sealing clamp 23 of arrangement 11 so that it protrudes through a connector port of the side-entry sub-assembly 10. The swab cup 13 and the connector 14 are then assembled on the cable 9. The clamp 23, which is around a packer 24 for example of felt or a synthetic material, is then tightened sufficiently to allow sliding of the cable 9, yet provide a good seal resulting from the saturation of the material comprising the packer 24 with grease injected via a grease point 25. The sub-assembly 10 is then fitted between the umbilical 4 and the TUTU 7.

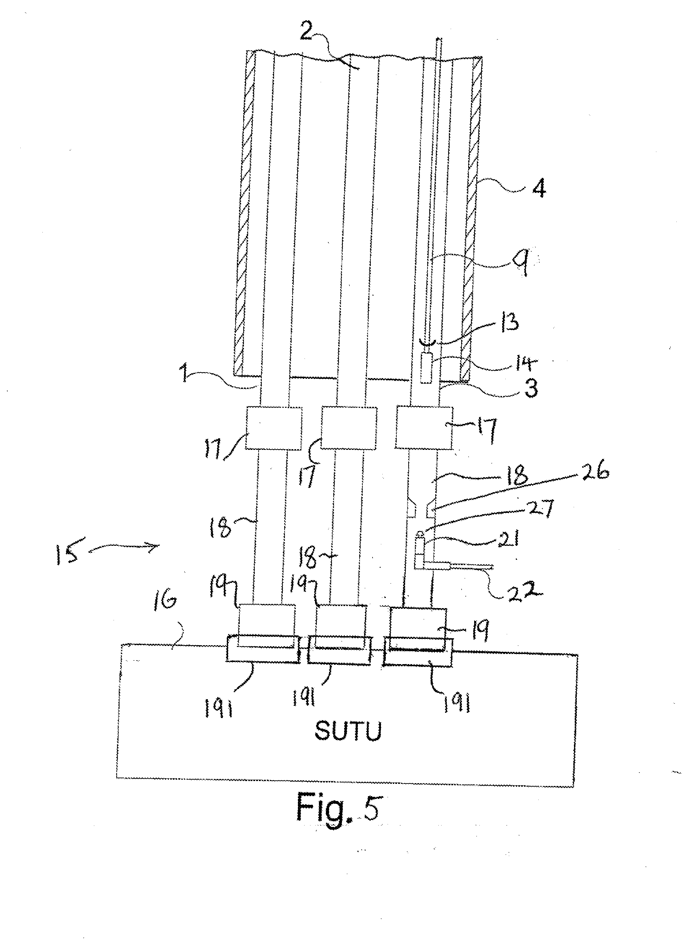

The subsea side-exit assembly 15 is installed by a remotely operated vehicle. With fluid flow through the conduit 3, the cable 9 is "pumped down" and the connector 14 is aligned with the mating connector 21 by a centraliser 26 for guiding the cable 9 and connector 21, located just above the connector 21 in the side-exit sub-assembly 15. There could be at least one further such centraliser above centraliser 26 in the passageway comprising duct 8, conduit 3 and duct 20. The connector 14 carries a cylinder of spring fingers which clamp it to a spigot 27 on the connector 21 to lock them together. The configuration of the side-exit sub-assembly 15 shown allows venting of the pumped down fluid to the sea or its recovery. Alternatively, it can be configured to connect to the SUTU 16 to allow continued use of the conduit 3 for fluid flow, as shown by Fig. 5. Other arrangements include the venting of the pumped down fluid during installation of the cable 9 and then closing the vent to allow continued use of the conduit for fluid flow. If multiple spare fluid conduits are free, then the side-exit assembly 15 can be configured to route the flow from the conduit carrying the cable 9 back up another fluid conduit to the surface. This flow path may then be closed (during the wet mating of connector 14 with connector 21) to allow future use of the second fluid conduit. Thus, the side-exit assembly 15 provides electrical and/or optical break-outs from the wet mated connection to traditional jumpers for connection to an SCM or other device requiring power and/or communication.

The side-entry and side-exit sub-assemblies may be for a single use or can be permanently in an installation or can be releasable and deployed for occasional operations. For example, the connector 14 could be latched and locked on to connector 21 and spigot 27 for a permanent installation or include the ability to de-latch it if the operator wants to remove it. De-latching could be achieved by applying tension from the topside, although an operator could just remove the subsea side exit assembly 15 and cut the cable 9.

Another possible use of the invention could be to "pump up" a supplemental or replacement cable from a subsea location to a topside location using production fluid.

A further possible use of the invention is to "pump down" a cable via a passageway which comprises a line separate from the umbilical and carrying a fluid, such as a chemical or water and/or gas injection line.

### Advantages of using the Invention

It avoids replacing a degraded umbilical for power and/or communication.

It enables an increase in the amount of power available at an installation through an additional cable (field expansion or new equipment).

It enables a second communication path for additional equipment.

## Claims

1. A method of installing a cable between a topside location of an underwater well installation and an underwater location of the installation, the method comprising inserting an end of the cable into a passageway between the locations and using a fluid passed along the passageway to displace the cable along the passageway so that it extends between said locations.

2. A method according to claim 1, wherein said passageway comprises a conduit in an umbilical between said locations.

3. A method according to claim 2, wherein said conduit comprises a spare or unused conduit in said umbilical.

4. A method according to claim 2, wherein said conduit comprises one used in operation of the well installation.

5. A method according to any of claims 2 to 4, wherein said umbilical is coupled at one, upper end to a topside umbilical termination unit.

6. A method according to claim 5, wherein at said upper end, said conduit is coupled to said topside umbilical termination unit via an upper duct providing part of said passageway and into which said cable is inserted.

7. A method according to any of claims 2 to 6, wherein, at an opposite, lower end of said umbilical, said conduit communicates with a lower duct providing part of said passageway.

8. A method according to claim 7, wherein said fluid is expelled or recovered from said lower duct.

9. A method according to either of claims 7 and 8, wherein said lower duct is coupled with an underwater umbilical termination unit.

10. A method according to any of claims 7 to 9, wherein there is a connector in said lower duct with which an opposite end of said cable couples.

11. A method according to claim 10, wherein said connector communicates externally of said lower duct.

12. A method according to any preceding claim, wherein said passageway is provided with means for guiding said cable in said passageway.

13. A method according to claim 12 as dependent on any of claims 7 to 11, wherein said guiding means is in said lower duct.

14. A method according to any preceding claim, wherein said cable carries means against which said fluid acts to assist displacement of the cable by said fluid.

15. A method according to any preceding claim, wherein said cable includes at least one electrical conductor and/or at least one fibre optic line.

16. A method according to claim 1, wherein said cable is displaced from said underwater location to said topside location, said fluid being production fluid.

17. A method according to claim 1, wherein said passageway comprises a line between said locations carrying a fluid.

18. An installation which includes a cable installed by a method according to any preceding claim.
